(19) **Europäisches Patentamt**

**European Patent Office**

**Office européen des brevets**

(11) **EP 0 866 568 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.$^7$: **H04B 7/08**

(21) Anmeldenummer: **97104786.5**

(22) Anmeldetag: **20.03.1997**

(54) **Verfahren und Empfangseinrichtung zum Detektieren von Daten**

Method and reception device for the detection of data

Procédé et dispositif de réception pour la détection des données

(84) Benannte Vertragsstaaten:
**DE ES FR GB IT**

(43) Veröffentlichungstag der Anmeldung:
**23.09.1998 Patentblatt 1998/39**

(73) Patentinhaber: **SIEMENS AKTIENGESELLSCHAFT**
**80333 München (DE)**

(72) Erfinder:
- **Baier, Paul-Walter, Prof.**
  **67661 Kaiserslautern (DE)**
- **Blanz, Josef**
  **66862 Kindsbach (DE)**
- **Jung, Peter, Dr.**
  **67697 Otterberg (DE)**
- **Farsakh, Christof**
  **80799 München (DE)**
- **Haardt, Martin**
  **81744 München (DE)**

(56) Entgegenhaltungen:
**WO-A-95/09490       US-A- 5 515 378**

- **KLEIN A ET AL: "Direction-of-arrival of partial waves in wideband mobile radio channels for intelligent antenna concepts" 1996 IEEE 46TH VEHICULAR TECHNOLOGY CONFERENCE. MOBILE TECHNOLOGY FOR THE HUMAN RACE (CAT. NO.96CH35894), PROCEEDINGS OF VEHICULAR TECHNOLOGY CONFERENCE - VTC, ATLANTA, GA, USA, 28 APRIL-1 MAY 1996, ISBN 0-7803-3157-5, 1996, NEW YORK, NY, USA, IEEE, USA, Seiten 849-853 vol.2, XP002039246**

**Beschreibung**

Die Erfindung betrifft ein Verfahren und eine Empfangseinrichtung zum Detektieren von Daten aus über eine Funkschnittstelle übertragenen Teilnehmersignalen, beispielsweise für Basisstationen in Mobilfunknetzen.

Aus P.Jung, J.Blanz, "Joint detection with coherent receiver antenna diversity in CDMA mobile radio systems", IEEE Transactions on Vehicular Technology, Bd. VT-44, 1995, S.76-88, sind mathematische Beschreibungen, die Funktionsweise und die Struktur von CDMA (Code Division Multiple Access)-Funkübertragungssystemen bekannt. Beim Einsatz solcher Systeme in der Mobilkommunikation besteht eine Funkschnittstelle zwischen ortsfesten Basisstationen und beweglichen Mobilstationen. Die Übertragungsstrecke von einer Basisstation zu einer Mobilstation wird als Abwärtsstrecke und die Übertragungsstrecke von einer Mobilstation zu einer Basisstation wird als Aufwärtsstrecke bezeichnet.

Es wird weiterhin gezeigt, daß die Übertragungsqualität in solchen Funkübertragungssystemen dadurch verbessert werden kann, daß anstelle eines einzigen Empfangssensors eine Anordnung mit mehreren Empfangssensoren verwendet werden kann. Entsprechend der Terminologie obengenannter Druckschriften bezeichnet man mit K die Anzahl der von einer Basisstation gleichzeitig im selben Frequenzkanal versorgten Mobilstationen. Ka bezeichnet die Anzahl der Empfangssensoren, die einer Empfangseinrichtung, beispielsweise der Basisstation, zugeordnet sind. In einem solchen Szenario bestehen folglich in der Aufwärtsstrecke K*Ka Funkkanäle zwischen den K Mobilstationen und den Ka Empfangssensoren der Basisstation. Jeder dieser Funkkanäle ist durch ein zeitdiskretes Basisbandäquivalent seiner Kanalimpulsantwort $g^{(k)\,(ka)}$ mit k=1..K, ka=1.. Ka, charakterisiert.

Nach dem Stand der Technik werden bei der empfängerseitigen Signalverarbeitung die Impulsantworten $g^{(k)\,(ka)}$ der Funkkanäle bestimmt und unter Kenntnis der Impulsantworten $g^{(k)\,(ka)}$ die Datendetektion ohne die Kenntnis von räumlichen Zusammenhängen durchgeführt. Durch dieses Verfahren zum Detektieren kann jedoch der Einfluß von Störern nicht ausreichend unterdrückt werden.

Der Erfindung liegt folglich die Aufgabe zugrunde, ein verbessertes Verfahren und eine verbesserte Empfangseinrichtung zum Detektieren von Daten anzugeben. Diese Aufgabe wird durch das Verfahren mit den Merkmalen des Patentanspruchs 1 und die Empfangseinrichtung mit den Merkmalen des Patentanspruchs 13 gelöst. Weiterbildungen der Erfindung sind den Unteransprüchen zu entnehmen.

Das erfindungsgemäße Verfahren berücksichtigt Kenntnisse über die durch die Richtungsinhomogenität der Wellenausbreitung verursachten gegenseitigen Abhängigkeiten zwischen den verschiedenen Kanalimpulsantworten, die im Stand der Technik als voneinander unabhängig vorausgesetzt werden. Unter Richtungsinhomogenität ist zu verstehen, daß die von einem Teilnehmer ausgesendeten Wellen aufgrund der Eigenschaften terrestrischer Funkkanäle, z.B. durch Reflexion, Streuung und Beugung im allgemeinen nicht gleichmäßig aus allen Richtungen, sondern - in Form einzelner Teilwellen - aus einer Anzahl unterschiedlicher Einfallsrichtungen am Empfangsort eintreffen. Nach dem erfindungsgemäßen Verfahren ist es nunmehr möglich, Kenntnisse über die durch die Richtungsinhomogenität der Wellenausbreitung verursachten gegenseitigen Abhängigkeiten von Störsignalen, die auf Störquellen oder die Sendesignale von anderen, nicht der betrachteten Basisstation zugeordneten Mobilstationen zurückgehen, auszunutzen.

Im allgemeinen ist die Anzahl der Einfallsrichtungen für jedes der K Teilnehmersignale unterschiedlich. Ohne Einschränkung der Allgemeinheit wird im folgenden angenommen, daß diese Anzahl für alle K Teilnehmersignale gleich ist und den Wert Kd hat.

Das erfindungsgemäße Verfahren zum Detektieren von Daten aus über eine Funkschnittstelle übertragenen Teilnehmersignalen bezieht sich auf eine Empfangseinrichtung, der eine Anzahl Ka Empfangssensoren zugeordnet ist. Eine Anzahl von K, über die Funkschnittstelle übertragenen Teilnehmersignalen besteht jeweils aus datentragenden Abschnitten und ggf. zusätzlich aus Trainingssequenzen. Ein k-tes Teilnehmersignal, k=1..K, wird dabei durch Kd sich in ihrer Einfallsrichtung am Empfangsort unterscheidenden Teilwellen übertragen.

In einem ersten Verfahrensschritt wird die Einfallsrichtung von zumindest einer Teilwelle bestimmt. In einem zweiten Schritt werden aus den Empfangssignalen richtungsselektive, d.h. unterschiedlichen Einfallsrichtungen zuordenbare, Kanalimpulsantworten bestimmt. Dieser Schritt beruht auf der Erkenntnis, daß jede vom herkömmlichen, nicht richtungsselektiven Kanalimpulsantworten $g^{(k)\,(ka)}$ durch Überlagerung von Kd richtungsselektiven Kanalimpulsantworten $h^{(k)\,(ka)}$, mit k=1..K und kk=1..Ka zustande kommt.

Es gilt also:

$$g^{(k)(ka)} = \sum_{kd=1}^{Kd} a^{(k)(ka)(kd)} \cdot h^{(k)(kd)}, \text{ mit } k=1..K \text{ und } ka=1..Ka. \qquad (1)$$

Dabei sind $a^{(k)\,(ka)\,(kd)}$ komplexe Bewertungsfaktoren zur Überlagerung der richtungsselektiven Kanalimpulsantworten $h^{(k)\,(ka)}$ zu den nicht richtungsselektiven Kanalimpulsantworten $g^{(k)\,(ka)}$. Zum Bestimmen der richtungsselektiven Kanalimpulsantworten h können ggf. auch Kenntnisse über Einfallsrichtungen oder Korrelationsmatrizen von störenden Teilwellen ausgenutzt werden.

Die Anzahl W*K*Ka der insgesamt zu schätzenden Parameter in $g^{(K)\,(Ka)}$, k=1..K, ka=1.. Ka, ist üblicherweise bei Mehrantennensystemen wesentlich größer als die Anzahl W*K*Kd der insgesamt zu schätzenden Parameter in $h^{(k)\,(kd)}$, k=1..K, kd=1..Kd, da Ka > Kd. Damit kann der Rechenaufwand beim Schätzen der Parameter nach dem erfindungsgemäßen Verfahren verringert werden.

Während des Empfangs eines kombinierten Empfangssignals em, das vorteilhafterweise von den Trainingssequenzen der Teilnehmersignale herrührt und die Empfangssignale $em^{(ka)}$, ka=1.. Ka der Ka Empfangssensoren enthält, hat dieses Empfangssignal em die Form:

$$em = G \cdot h + n_m \qquad (2)$$

mit G als bekannter Matrix (L*Ka)x(W*K*Kd), wobei L die Anzahl der zeitdiskreten Abtastwerte des Empfangssignals em und W die Länge der Kanalimpulsantworten bezeichnet. Diese Matrix G ist durch die geometrische Anordnung und die komplexen Charakteristiken der Ka Empfangssensoren, durch die gesendeten Trainingssequenzen und die Kd Einfallsrichtungen gegeben. Der Vektor h enthält das zeitdiskrete Basisbandäquivalent der K*Kd richtungsselektiven Kanalimpulsantworten $h^{(K)\,(Kd)}$. $n_m$ bezeichnet einen unbekannten (L*Ka) Spaltenvektor eines zeitdiskreten Störsignals.

Aus Gleichung (1) sind G und em bekannt, so daß die richtungsselektiven Kanalimpulsantworten h bestimmt werden können.

Während der datentragenden Abschnitte hat das kombinierte Empfangssignal e der Empfangssignale $e^{(ka)}$ der Empfangssensoren die Form:

$$e = A \cdot d + n. \qquad (3)$$

Wobei A eine (M*Ka)x(N*K) Matrix, wobei M die Anzahl der diskreten Abtastzeitpunkte des Empfangssignals und N die Anzahl der übertragenen Datensymbole pro Teilnehmer bezeichnet. n ist wiederum ein unbekannter (M*Ka) Spaltenvektor eines zeitdiskreten Störsignals.

In Gleichung (3) sind A - durch die K*Kd Einfallsrichtungen, die richtungsselektiven Kanalimpulsantworten h, die geometrische Anordnung und komplexe Charakteristiken der Empfangssensoren und beim Verwenden von einer CDMA-Teilnehmerseparierung durch die benutzten Teilnehmerkode - und e bekannt, so daß die Daten d detektiert werden können.

In einem dritten Verfahrensschritt werden also aus von den datentragenden Abschnitten der K Teilnehmersignale herrührenden Empfangssignalen e unter Verwendung der zuvor bestimmten Einfallsrichtungen und der richtungsselektiven Kanalimpulsantworten h die Daten d detektiert. Bei diesem Schritt können ggf. auch Kenntnisse über Einfallsrichtungen, die Leistung, das Spektrum oder die Kovarianzmatrix von Störsignalen ausgenutzt werden.

Das erfindungsgemäße Verfahren ermöglicht eine Verbesserung der Empfangsqualität, da als zusätzliches Wissen für die Datendetektion der Zusammenhang zwischen nicht richtungsselektiven Kanalimpulsantworten g und richtungsselektiven Kanalimpulsantworten h genutzt wird. Alle nicht richtungsselektiven Kanalimpulsantworten g der einzelnen Ka Empfangssensoren können auf die gleichen richtungsselektiven Kanalimpulsantworten h zurückgeführt werden.

Gemäß einer vorteilhaften Ausgestaltung der Erfindung zum Bestimmen der Einfallsrichtungen werden nicht richtungsselektive Kanalimpulsantworten g von K*Ka Kanälen und aus diesen nicht richtungsselektiven Kanalimpulsantworten g die Einfallsrichtung von zumindest einer Teilwelle bestimmt. Die nicht richtungsselektive Kanalimpulsantworten g bilden eine gute Grundlage für die Richtungsschätzung, da in der Empfangseinrichtung die Trainingssequenzen der Teilnehmersignale bekannt sind und eine genauere Schätzung als mit unbekannten, noch zu detektierenden Daten möglich ist.

Im einfachsten Fall kann man auf Richtungsinformationen eines a-priori-Wissens zurückgreifen, die beispielsweise aus geometrisch-geographischen Überlegungen über die Standorte der Mobilstationen bzw. Basisstationen oder auch von Störquellen resultieren.

Eine Weiterbildung des erfindungsgemäßen Verfahrens sieht vor, zum Bestimmen der Einfallsrichtungen der Teilwellen hochauflösende Richtungsschätzverfahren zu benutzen. Solche hochauflösenden Richtungsschätzverfahren, wie beispielsweise das MUSIC (Multiple Signal Classification) oder das ESPRIT (Estimation of Signal Parameters via Rotational Invariance Techniques) Verfahren, nutzen Kenntnisse der komplexen Strahlungscharakteristik der Empfangssensoren bzw. bestimmte geometrische Voraussetzungen für die Anordnung der Empfangssensoren, um eine genaue und mit geringem Signalverarbeitungsaufwand auskommende Richtungsschätzung vorzunehmen.

Die Bestimmung der richtungsselektiven Kanalimpulsantworten h erfolgt vorteilhafterweise nach dem Verfahren der Gauß-Markov -Schätzung, wobei ein Schätzwert h für die richtungsselektive Kanalimpulsantworten h aus:

$$\hat{h} = (G^{*T} \cdot \tilde{R}_n^{-1} G)^{-1} \cdot G^{*T} \cdot \tilde{R}_n^{-1} \cdot em \qquad (4)$$

berechnet werden kann. $\tilde{R}_n$ bezeichnet die Kovarianzmatrix des Störsignals $n_m$, welche durch die Einfallsrichtungen und relativen Leistungen der störenden Teilwellen, die Spektren der Störsignale, sowie durch die geometrische Anordnung und komplexe Strahlungscharakteristik der Empfangssensoren bestimmt ist. Dieses Verfahren entspricht der Maximum-Likelihood-Schätzung der richtungsselektiven Kanalimpulsantworten h und kann durch rekursives Auflösen von (4) aufwandsgünstig realisiert werden.

Weitere vorteilhafte Ausgestaltungen des erfindungsgemäßen Verfahrens betreffen das Detektieren der Daten, wobei vorteilhafterweise ein Verfahren der Maximum-Likelihood-Schätzung oder das Zero-Forcing-Verfahren oder das MMSE (Minimum Mean Square Error)-Verfahren gewählt wird.

Beim Zero-Forcing-Verfahren können Schätzwerte d der Daten d aus:

$$\hat{d} = (A^{*T} \cdot R_n^{-1} \cdot A)^{-1} \cdot A^{*T} \cdot R_n^{-1} \cdot e \qquad (5)$$

bestimmt werden, wobei $R_n$ die Kovarianzmatrix des Störsignals n bezeichnet, welche durch die Einfallsrichtungen und relativen Leistungen der störenden Teilwellen, die Spektren der Störsignale, sowie durch die geometrische Anordnung und komplexe Strahlungscharakteristik der Empfangssensoren bestimmt ist.

Beim MMSE-Verfahren können Schätzwerte d der Daten d aus:

$$\hat{d} = (A^{*T} \cdot R_n^{-1} A + R_d^{-1})^{-1} \cdot A^{*T} R_n^{-1} \cdot e \qquad (6)$$

bestimmt werden, wobei $R_n$ die Kovarianzmatrix des Störsignals n und $R_d$ die Kovarianzmatrix der Daten d bezeichnet.

Zum Detektieren der Daten bzw. zur Richtungsschätzung werden vorteilhafterweise Methoden zur Entscheidungsrückkopplung angewandt. Damit können die Schätzungen und die Detektion iterativ verbessert werden.

Zum Bestimmen der Einfallsrichtungen der Teilwellen wird nach einer weiteren Ausgestaltung der Erfindung eine Mittelung der bestimmten Werte über ein Zeitintervall durchgeführt. Innerhalb eines Zeitintervalls, das einem Vielfachen der Kohärenzzeit der Kanalimpulsantworten entsprechen kann, ändert sich die Einfallsrichtung wenig. Eine Mittelung verbessert die Richtungsschätzung, da zufällige Fehler reduziert werden. Bei einer Übertragung der Daten in Funkblöcken, kann die Mittelung für einen Funkblock oder auch eine Vielzahl von Funkblöcken durchgeführt werden. Die Anzahl der Funkblöcke für eine Mittelung, d.h. das Zeitintervall kann dabei einstellbar sein, wobei Änderungen der Einfallsrichtungen eine Änderung des Zeitintervalls hervorrufen. Ändern sich die Kanalbedingungen schnell, beispielsweise bei einer Beschleunigung der Bewegung einer Mobilstation, dann kann die Richtungsschätzung auf einen kürzeren Zeitintervall beschränkt werden.

Nach vorteilhaften Ausgestaltungen der Erfindung werden Zusammenhänge zwischen der Bestimmung der richtungsselektiven Kanalimpulsantworten und der Datendetektion ausgenutzt.

So bestehen gemäß einer Ausgestaltung die K Teilnehmersignale aus datentragenden Abschnitten und Trainingssequenzen, wobei aus den von den Trainingssequenzen der K Teilnehmersignale herrührenden Empfangssignalen die richtungsselektiven Kanalimpulsantworten bestimmt werden und die Daten aus den von den datentragenden Abschnitten herrührenden Empfangssignalen detektiert werden.

Das Bestimmen der richtungsselektiven Kanalimpulsantworten und die Datendetektion können dabei aus Teilnehmersignalen eines Funkblocks durchgeführt werden. Damit liegt für die Datendetektion eine möglichst aktuelle Kanalschätzung vor.

Alternativ dazu kann das Bestimmen der richtungsselektiven Kanalimpulsantworten und die Datendetektion aus Teilnehmersignalen unterschiedlicher Funkblöcke durchgeführt werden. Damit kann beispielsweise eine Parallelverarbeitung zur Kanalschätzung und Datendetektion eingeleitet werden oder der Rechenaufwand zur Kanalschätzung kann dadurch verringert werden, daß letztere nur in größeren Abständen wiederholt wird.

So können die Einfallsrichtungen und/oder die richtungsselektiven Kanalimpulsantworten mit einem Nachführverfahren nach eine Periode, die länger als eine funkblockbezogene Rahmenstruktur ist, erneut bestimmt werden oder es können Informationen über die Einfallsrichtungen und/oder die richtungsselektiven Kanalimpulsantworten in der Empfangseinrichtung permanent gespeichert sein, falls diese nicht oder wenig zeitabhängig sind. Eine Aktuallisierung dieser Informationen über die Einfallsrichtungen, die richtungsselektiven Kanalimpulsantworten und/oder zu Störern können vorteilhafterweise von einem Operations- und Wartungszentrum veranlaßt werden.

Im folgenden wird der Erfindungsgegenstand anhand von zeichnerischen Darstellungen näher erläutert.

Dabei zeigen

FIG 1     ein Blockschaltbild eines Mobilfunknetzes,

FIG 2     ein Blockschaltbild einer Rahmenstruktur der Funkblöcke für die Funkschnittstelle,

FIG 3     ein Blockschaltbild einer Empfangseinrichtung mit zugeordneten Empfangssensoren,

FIG 4     ein Blockschaltbild eines richtungsselektiven Kanalschätzers, und

FIG 5     ein Blockschaltbild einer Detektionseinrichtung.

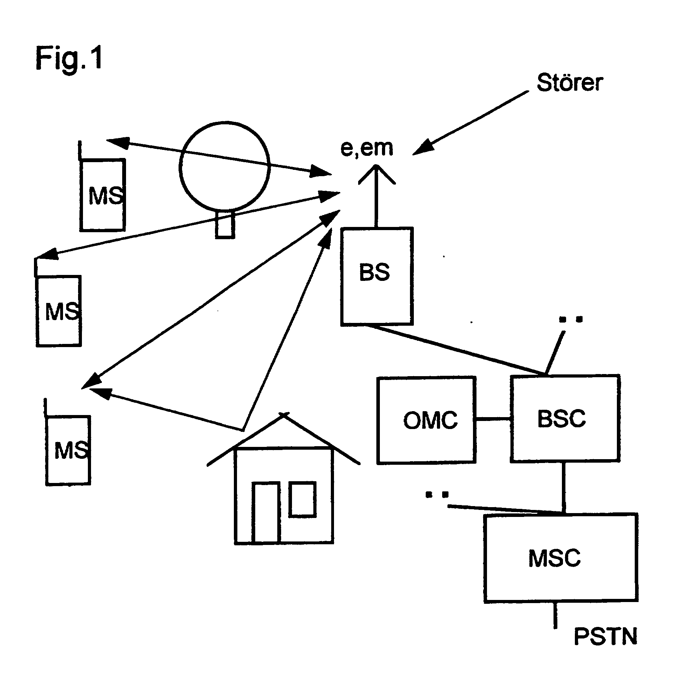

Das in FIG 1 dargestellte Mobil-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobil-Vermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Nachrichtenverbindung zu Mobilstationen MS aufbauen kann. In FIG 1 sind beispielhaft drei Funkverbindungen zwischen drei Mobilstationen MS und einer Basisstation BS dargestellt. Ein Operations- und Wartungszentrum OMC realisiert Kontroll- und Wartungsfunktionen für das Mobilfunknetz bzw. für Teile davon. Diese Struktur ist auf andere Mobilfunknetze übertragbar, in denen die Erfindung zum Einsatz kommen kann.

Die Kommunikationsverbindungen zwischen der Basisstation BS und den Mobilstationen MS unterliegt einer Mehrwegeausbreitung, die durch Reflektionen beispielsweise an Gebäuden oder Bepflanzungen zusätzlich zum direkten Ausbreitungsweg hervorgerufen werden. Geht man von einer Bewegung der Mobilstationen MS aus, dann führt die Mehrwegeausbreitung zusammen mit weiteren Störungen dazu, daß bei der empfangenden Basisstation BS sich die Signalkomponenten der verschiedenen Ausbreitungswege eines Teilnehmersignals zeitabhängig überlagern. Weiterhin wird davon ausgegangen, daß sich die Teilnehmersignale verschiedener Mobilstationen MS am Empfangsort zu einem Empfangssignal e, em überlagern. Aufgabe der empfangenden Basisstation BS ist es, in den Teilnehmersignalen übertragene Daten d zu detektieren und einzelnen teilnehmerindividuellen Kommunikationsverbindungen zuzuordnen.

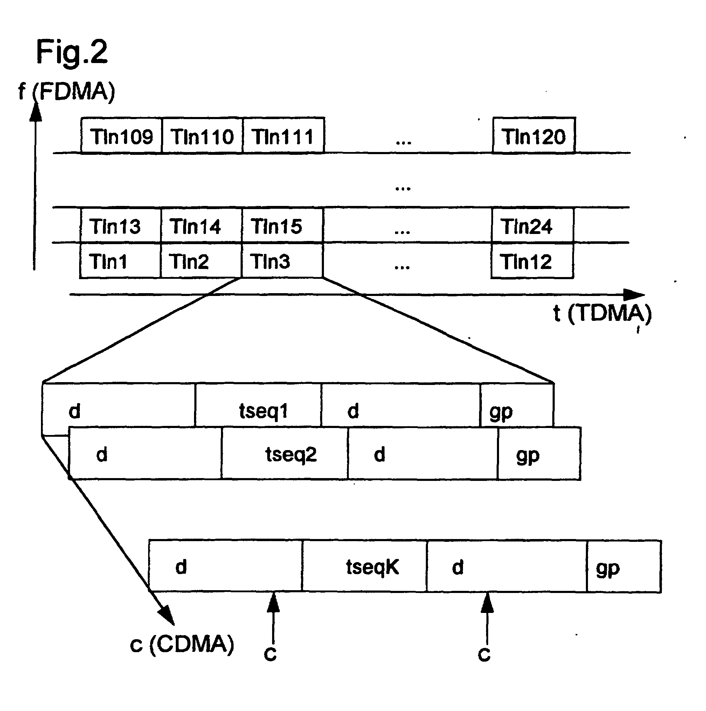

In FIG 2 ist die Übertragung der Teilnehmersignale über die Funkschnittstelle gezeigt. Die Funkschnittstelle hat dabei eine Frequenzmultiplex- (FDMA), eine Zeitmultiplex- (TDMA) und eine Kodemultiplex (CDMA) Komponente. Mehrere Frequenzbänder entlang der Frequenzachse f sind für das Mobilfunknetz vorgesehen. Weiterhin ist die Zeitachse t derart in ein Zeitraster bestehend aus mehreren Zeitschlitzen pro Zeitrahmen unterteilt, daß eine Übertragung in Funkblöcken erfolgt. Die Teilnehmersignale mehrerer Mobilstationen MS sind einer Teilnehmergruppe Tln1, Tln2 .. Tln120 zugeordnet, d.h. während des Funkblockes einer Teilnehmergruppe, beispielsweise Tln3 für die drei Mobilstationen MS der FIG 1, überlagern sich die Teilnehmersignale zu einem Empfangssignal e, em, das von einer Empfangseinrichtung in der Basisstation BS auszuwerten ist.

Innerhalb eines Funkblockes besteht ein Teilnehmersignal aus zwei datentragenden Abschnitten mit Daten d, in deren Mitte eine teilnehmerindividuelle Trainingssequenz tseq1 bis tseqK eingebracht ist. Der Funkblock wird durch eine Schutzzeit gp abgeschlossen. Die Teilnehmersignale unterscheiden sich durch einen Teilnehmerkode c, wodurch sich innerhalb der datentragenden Abschnitte durch teilnehmerspezifische Feinstrukturen, die durch die teilnehmerspezifischen CDMA-Kodes $c^{(k)}$, k=1..K, bestimmt sind. Durch diese im weiteren als Teilnehmerkodes bezeichneten CDMA-Kodes c, die empfangsseitig bekannt sind, ist eine Separierung der Teilnehmersignale möglich.

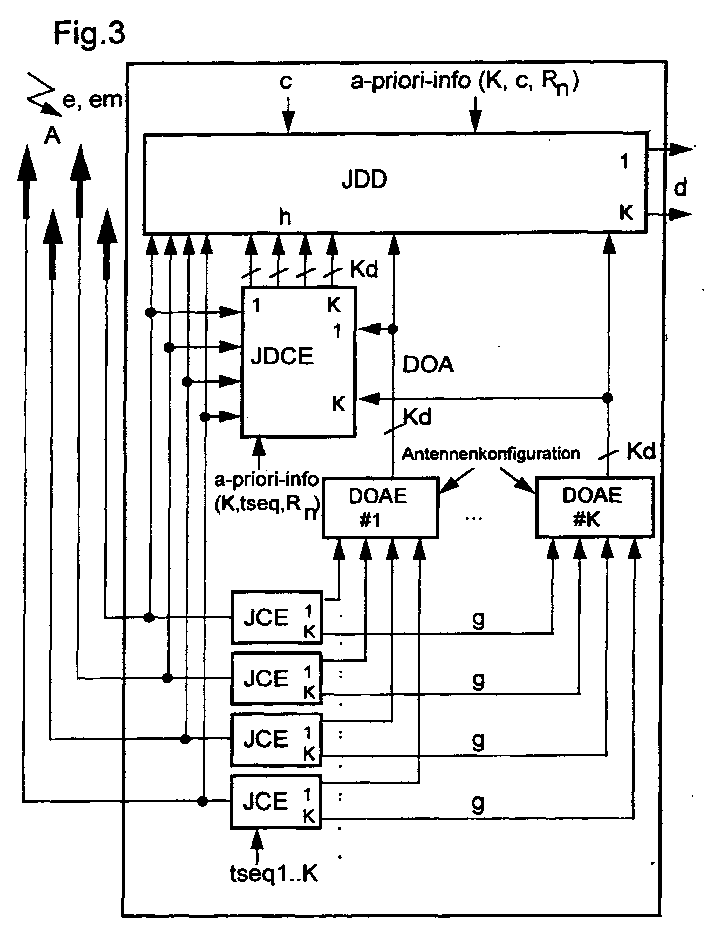

In FIG 3 ist eine Empfangseinrichtung mit zugeordneten Empfangssensoren A dargestellt. Diese Empfangseinrichtung ist Teil der Basisstation BS und empfängt von den sendenden Mobilstationen MS des Mobilfunknetzes Empfangssignale e, em. Im weiteren wird für die Basisstation BS der Empfangsfall dargestellt, nichtsdestotrotz besteht üblicherweise eine zweiseitige Kommunikationsverbindung, d.h. die Basisstation BS weist auch ein Sendeeinrichtung auf.

Die Ka=4 Empfangssensoren A bilden eine Antenneneinrichtung, die als intelligente Antenneneinrichtung ausgebildet ist, d.h. mehrere Empfangssensoren A dieser intelligenten Antenneneinrichtung empfangen zum gleichen Zeitpunkt Empfangssignale e oder em, die derartig miteinander kombiniert werden, daß die Übertragungsqualität gegenüber Systemen mit einer Empfangsantenne verbessert wird.

Aus den Empfangssignalen e, em werden z.B. durch eine Übertragung ins Basisband und darauffolgende Analog/Digitalwandlung digitale Signale erzeugt und in der Empfangseinrichtung ausgewertet.

Die Empfangseinrichtung umfaßt mehrere Kanalschätzer JCE, mehrere Richtungsschätzer DOAE, einen richtungsselektiven Kanalschätzer JDCE und eine Detektionseinrichtung JDD. Zusätzlich zu den Empfangssignalen e, em liegt in der Empfangseinrichtung ein Wissen a-priori-info über die Anzahl K der Teilnehmer, deren Trainingssequenzen tseq1,..,tseqK und deren Teilnehmerkode c vor, ggf. kann auch über Informationen zu Störsignalen verfügt werden.

Den Kanalschätzern JCE werden die - bereits digitalisierten - Empfangssignale em der Empfangssensoren A zugeführt. In den Kanalschätzern JCE erfolgt eine Bestimmung der nicht richtungsselektiven Kanalimpulsantworten g durch eine Gauß-Markov- oder eine Maximum-Likelihood-Schätzung. Pro Kanalschätzer JCE wird das Empfangssignal eines Empfangssensors A ausgewertet, wobei an Ausgängen der Kanalschätzer JCE jeweils K nicht richtungsselektiven Kanalimpulsantworten g bereitgestellt werden. Die Berechnung dieser nicht richtungsselektiven Kanalimpulsantworten g erfolgt aus den Empfangssignalen em$^{(ka)}$, ka=1..Ka, die von den Trainingssequenzen tseq1 bis tseqK der K=3 Teilnehmersignale herrühren.

Die nicht richtungsselektiven Kanalimpulsantworten g werden jeweils den K Richtungsschätzern DOAE zugeführt, die teilnehmerbezogen eine Richtungsschätzung basierend auf diesen nicht richtungsselektiven Kanalimpulsantworten g durchführen. Die Anzahl der pro Teilnehmersignal bestimmten Einfallsrichtungen wird mit Kd bezeichnet. Diese Anzahl Kd kann sich von Teilnehmersignal zu Teilnehmersignal unterscheiden. Beim Bestimmen der Einfallsrichtungen (auch DOA Direction Of Arrival bezeichnet) kommt der ein- oder mehrdimensionale UNITARY-ESPRIT-Algorithmus zum Einsatz.

Im richtungsselektiven Kanalschätzer JDCE werden die von den Trainingssequenzen tseq1 bis tseqK herrührenden Empfangssignale em$^{(ka)}$ der Empfangssensoren A, und die bestimmten Einfallsrichtungen DOA der Teilwellen verarbeitet und daraus richtungsselektive Kanalimpulsantworten h bestimmt. Diese Kanalschätzung beruht auf dem Verfahren der Maximum-Likelihood-Schätzung.

Schließlich werden die Ka Empfangssignale e$^{(ka)}$, ka=1..Ka, die bestimmten richtungsselektiven Kanalimpülsantworten h und die bestimmten Einfallsrichtungen DOA der Detektionseinrichtung JDD zugeführt, die zudem die Teilnehmerkodes c und zusätzliches Wissen a-priori-info über die Einfallsrichtung von Störsignalen in Form von $R_n$ oder die geographische Position von Mobilstationen MS in Bezug auf die Basisstation BS verarbeitet.

In dieser Detektionseinrichtung JDD findet basierend auf den Empfangssignalen e$^{(ka)}$, die von den datentragenden Abschnitten herrühren, die Detektion der Daten d statt. Dazu wird ein Zero-Forcing-Verfahren angewendet. Alternative vorteilhafte Verfahren sind die Maximum-Likelihood-Schätzung oder ein MMSE-Verfahren. Im Ergebnis der Datendetektion werden die detektierten Daten d der K Teilnehmersignale für einen Funkblock an Ausgänge der Detektionseinrichtung JDD gelegt.

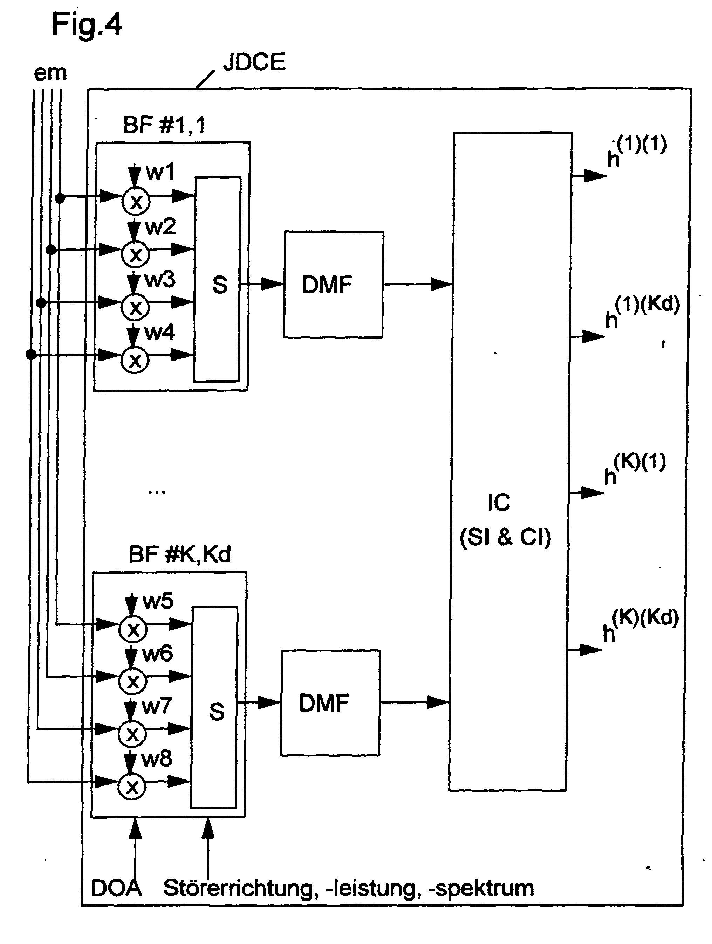

FIG 4 zeigt einen richtungsselektiven Kanalschätzer JDCE, der Strahlformer BF enthält, die für die Ka Empfangssignale em$^{(ka)}$ jeweils eine Gewichtung durch strahlformerindividuelle Wichtungsfaktoren w1 bis w4 bzw. w5 bis w8 und ein Aufsummieren der Signalkomponenten in einer Summiereinrichtung S zu einem Signal, für das das Signal-Rausch-Verhältnis maximiert wird, vornehmen, wobei dieses Signal anschließend einem dekorrelierenden signalangepaßten Filter DMF zugeführt wird. In einer Einrichtung IC zur Interferenzauslöschung werden die Eigen- SI und Kreuzinterferenzen CI ausgeglichen und richtungsselektive Kanalimpulsantworten h gewonnen.

In den Strahlformern BF werden zusätzlich die Informationen über die Einfallsrichtungen DOA der Teilwellen und die Richtungen und relativen Leistungen der störerenden Teilwellen verarbeitet. Diese Richtungen beeinflussen die Wichtungsfaktoren w1 bis w4 bzw. w5 bis w8 für jeden Strahlformer BF individuell. Die Strahlformer BF und die dekorrelierenden signalangepaßten Filter DMF wirken wie ein räumlich auflösendes dekorrelierendes signalangepaßtes Filter, die jeweils auf eine Teilwelle - somit K*Kd - angewandt werden.

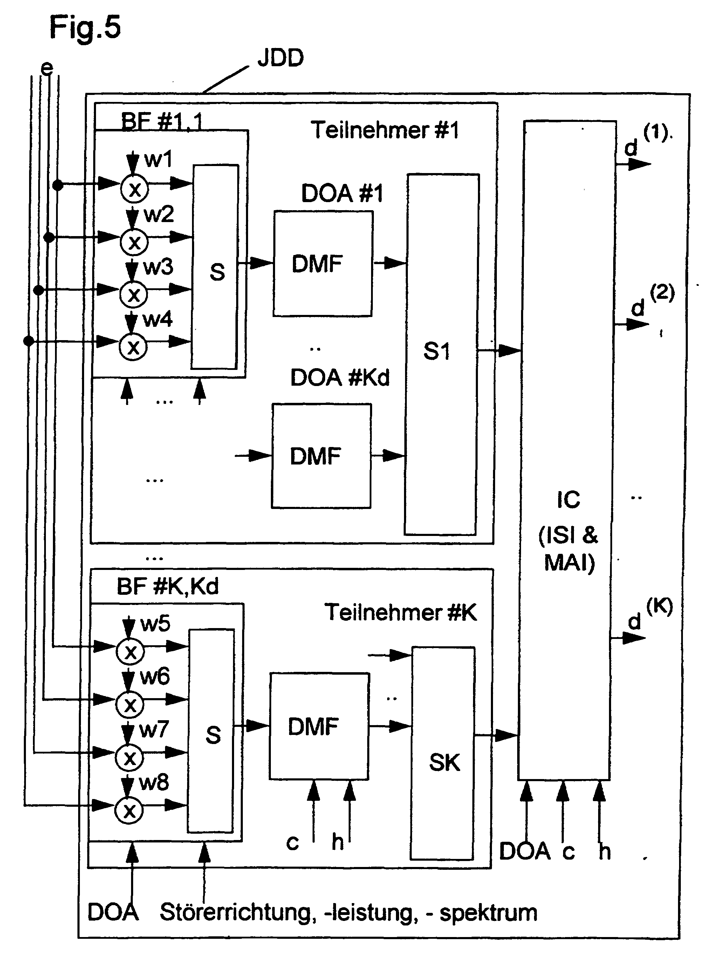

In FIG 5 wird die Detektionseinrichtung JDD gezeigt. Diese Detektionseinrichtung JDD verarbeitet die datentragenden Abschnitte der Empfangssignale e, wobei entsprechend der geschilderten Vorgehensweise beim richtungsselektiven Kanalschätzer JDCE ein räumlich auflösendes dekorrelierendes signalangepaßtes Filter die K*Kd Teilwellen der Empfangssignale e zum Maximieren des Signal-Rausch-Verhältnisses überlagert. Diese Maximierung des Signal-Rausch-Verhältnisses wird für jede Einfallsrichtung DOA eines jeden Teilnehmersignals durchgeführt, wobei die Kd Signalkomponenten der einzelnen Teilwellen eines Teilnehmersignals nach dem Maximum-Ratio-Combining-Verfahren in Summiereinrichtungen S1 bis SK überlagert werden.

Die Teilnehmersignale werden anschließend einer Einrichtung IC zur Interferenzauslöschung zugeführt, die die Intersymbol-ISI und Mehrfachzugriff- (Multiple Access) Interferenzen MAI ausgleicht. Dabei werden auch die Informationen über die Teilnehmerkodes c, die Einfallsrichtungen DOA, die richtungsselektiven Kanalimpulsantworten h und ggf. a-priori-Wissen über die Störer in Form von $R_n$ verarbeitet. An einem Ausgang der Einrichtung IC zur Interferenzauslöschung liegen die detektierten Daten d der Teilnehmersignale separiert vor. Bei der Interferenzauslöschung kommt ein sogenanntes JD (Joint Detection) Verfahren zum Einsatz.

Durch die erfindungsgemäße Empfangseinrichtung wird die zeitliche Dispersion und Varianz der Empfangssignale verringert. Weiterhin können durch die räumliche Auflösung eine größere Anzahl von Mobilstationen MS in einem Funkbereich einer Basisstation BS versorgt werden bzw. der Funkbereich kann durch die Richtwirkung derart gestaltet werden, daß auch die Sendeleistungen der Mobilstationen MS deutlich verringert werden.

**Patentansprüche**

1. Verfahren zum Detektieren von Daten (d) aus über eine Funkschnittstelle übertragenen Teilnehmersignalen, bei dem

   - einer Empfangseinrichtung eine Anzahl Ka Empfangssensoren (A) zugeordnet ist,
   - ein k-tes Teilnehmersignal, k=1..K, durch Kd sich in ihrer Einfallsrichtung (DOA) am Empfangsort unterscheidenden Teilwellen übertragen wird,
   - die Einfallsrichtung (DOA) von zumindest einer Teilwelle bestimmt wird,
   - richtungsselektive, d.h. unterschiedlichen Einfallsrichtungen (DOA) zuordenbare Kanalimpulsantworten ($h^{(k)\,(kd)}$) bestimmt werden, und
   - aus den von den K Teilnehmersignalen herrührenden Empfangssignalen ($e^{(ka)}$) unter Verwendung der zuvor bestimmten Einfallsrichtungen (DOA) und der richtungsselektiven Kanalimpulsantworten ($h^{(k)\,(kd)}$) die Daten ($d^{(k)}$) detektiert werden.

2. Verfahren nach Anspruch 1, bei dem

   - die K Teilnehmersignale aus datentragenden Abschnitten und Trainingssequenzen (tseq1, tseq2, tseqK) bestehen,
   - aus den von den Trainingssequenzen (tseq1, tseq2, tseqK) der K Teilnehmersignale herrührenden Empfangssignalen ($em^{(ka)}$) die richtungsselektiven Kanalimpulsantworten ($h^{(k)\,(kd)}$) bestimmt werden, und
   - die Daten ($d^{(k)}$) aus den von den datentragenden Abschnitten herrührenden Empfangssignalen ($e^{(ka)}$) detektiert werden.

3. Verfahren nach Anspruch 1 oder 2, bei dem das Bestimmen der richtungsselektiven Kanalimpulsantworten ($h^{(k)\,(kd)}$) und die Datendetektion aus Teilnehmersignalen eines Funkblocks durchgeführt werden.

4. Verfahren nach Anspruch 1 oder 2, bei dem das Bestimmen der richtungsselektiven Kanalimpulsantworten ($h^{(k)\,(kd)}$) und die Datendetektion aus Teilnehmersignalen unterschiedlicher Funkblöcke durchgeführt werden.

5. Verfahren nach Anspruch 4, bei dem die Einfallsrichtungen (DOA) und/oder die richtungsselektiven Kanalimpulsantworten ($h^{(k)\,(kd)}$) mit einem Nachführverfahren nach eine Periode, die länger als eine funkblockbezogene Rahmenstruktur ist, erneut bestimmt werden.

6. Verfahren nach Anspruch 4, bei dem Informationen (a-priori-info) über die Einfallsrichtungen (DOA) und/oder die richtungsselektiven Kanalimpulsantworten ($h^{(k)\,(kd)}$) in der Empfangseinrichtung permanent gespeichert sind.

7. Verfahren nach Anspruch 6, bei dem die Informationen (a-priori-info) über die Einfallsrichtungen (DOA), die richtungsselektiven Kanalimpulsantworten ($h^{(k)\,(kd)}$) und/oder zu Störern von einem Operations- und Wartungszentrum (OMC) eingestellt werden können.

8. Verfahren nach einem der vorhergehenden Ansprüche, bei dem zum Bestimmen der Einfallsrichtungen (DOA)

   - nicht richtungsselektive Kanalimpulsantworten (g) bestimmt werden, und
   - aus den nicht richtungsselektiven Kanalimpulsantworten (g) die Einfallsrichtung (DOA) von zumindest einer Teilwelle bestimmt wird.

9. Verfahren nach einem der vorhergehenden Ansprüche, bei dem zum Bestimmen der Einfallsrichtungen (DOA) der Teilwellen hochauflösende Richtungsschätzverfahren benutzt werden.

**10.** Verfahren nach einem der vorhergehenden Ansprüche, bei dem zum Detektieren der Daten (d) Methoden zur Entscheidungsrückkopplung angewandt werden.

**11.** Verfahren nach einem der vorhergehenden Ansprüche, bei dem zum Bestimmen der Einfallsrichtungen (DOA) eine Mittelung der bestimmten Werte über ein Zeitintervall erfolgt.

**12.** Verfahren nach Anspruch 11, bei dem
das Zeitintervall einstellbar ist, wobei Änderungen der Einfallsrichtungen (DOA) eine Änderung des Zeitintervalls hervorrufen.

**13.** Empfangseinrichtung zum Detektieren von Daten (d) aus über eine Funkschnittstelle übertragenen Teilnehmersignalen, wobei ein k-tes Teilnehmersighal, k=1..K, durch Kd sich in ihrer Einfallsrichtung (DOA) am Empfangsort unterscheidenden Teilwellen übertragen wird,

- mit zugeordneten Ka Empfangssensoren (A),
- mit zumindest einem Richtungsschätzer (DOAE) zum Bestimmen von Einfallsrichtungen (DOA) von zumindest einer Teilwelle,
- mit einem richtungsselektiven Kanalschätzer (JDCE) zum Bestimmen von richtungsselektiven, d.h. unterschiedlichen Einfallsrichtungen (DOA) zuordenbaren Kanalimpulsantworten ($h^{(k)\,(kd)}$),
- mit einer Detektionseinrichtung (JDD) zum Detektieren der Daten (d) von aus datentragenden Abschnitten der K Teilnehmersignale herrührenden Empfangssignalen ($e^{(ka)}$) unter Verwendung der zuvor bestimmten Einfallsrichtungen (DOA) und der richtungsselektiven Kanalimpulsantworten ($h^{(k)\,(kd)}$).

**14.** Empfangseinrichtung nach Anspruch 13,
mit zumindest einem Kanalschätzer (JCE) zum Schätzen von nicht richtungsselektiven Kanalimpulsantworten (g).

**15.** Empfangseinrichtung nach Anspruch 13 oder 14,
bei der zu einer Teilnehmerseparierung ein CDMA-Verfahren eingesetzt wird und die Detektionseinrichtung (JDD) anhand von teilnehmerindividuellen Kodes (c) die Datendetektion durchführt.

**16.** Empfangseinrichtung nach Anspruch 15,
bei der die Detektionseinrichtung (JDD) bei der Datendetektion Einflüsse der übrigen Teilnehmersignale berücksichtigt.

**17.** Empfangseinrichtung nach einem der Ansprüche 13 bis 16, bei der eine Teilnehmerseparierung nach einem TDMA- und/oder FDMA-Verfahren eingesetzt wird.

**18.** Empfangseinrichtung nach einem der Ansprüche 13 bis 17, bei der unter Verwendung der Kenntnis über Einfallsrichtungen, Leistungen, Spektrum oder eine Korrelationsmatrix von Störsignalen durch die Detektionseinrichtung (JDD) eine Störunterdrückung vorgenommen wird.

**19.** Empfangseinrichtung nach einem der Ansprüche 13 bis 18, bei der nach Schätzung der Einfallsrichtungen (DOA) von Störsignalen im Sinne einer Iteration eine verbesserte Kanalschätzung und Störunterdrückung durch die Detektionseinrichtung (JDD) vorgenommen wird.

**20.** Empfangseinrichtung nach einem der Ansprüche 13 bis 19, die als Teil einer Basisstation (BS) eines Mobil-Kommunikationssystems ausgebildet ist.

**Claims**

**1.** Method to detect data (d) from subscriber signals transmitted via a radio interface in which

- a number Ka of reception sensors (A) are assigned to a direction of arrival,
- a kth subscriber signal, k=1..K is transmitted by Kd different part waves that each vary in their direction of arrival at the point of reception.
- the direction of arrival (DOA) is determined from at least one partial wave,
- directionally selective (i.e. assigned to different directions of arrival) channel impulse responses (h (k)(kd))are determined and

- data (d $^{(k)}$) is detected from the reception signals (e $^{(ka)}$) derived from K subscriber signals using the direction of arrival (DOA) determined above and the directionally selective channel impulse responses (h $^{(k)(kd)}$).

2. Method according to Claim 1 in which

- K subscriber signals comprise data-bearing sections and training sequences (tseq1, tseq2, tseqK),
- directionally selective channel impulse responses h $^{(k) (kd)}$ are determined from the reception signals (em $^{(ka)}$) derived from the training sequences (tseq1, tseq2, tseqK) of K subscriber signals, and
- data (d $^{(k)}$) is detected from the reception signals (e $^{(ka)}$) derived from the data-bearing sections.

3. Method according to Claim 1 or 2 in which directionally selective channel impulse responses h $^{(k) (kd)}$ are determined and data is detected from subscriber signals of a radio block.

4. Method according to Claim 1 or 2 in which directionally selective channel impulse responses h $^{(k) (kd)}$ are determined and data is detected from subscriber signals of different radio blocks.

5. Method according to Claim 4 in which the direction of arrival (DOA) and/or the directionally selective channel impulse responses (h $^{(k) (kd)}$) are re-determined using a follow-up method after a period that is longer than a radio block-related frame structure.

6. Method according to Claim 4 in which A priori information about the directions of arrival and/or directionally selective channel impulse responses can be permanently stored in the reception device.

7. Method according to Claim 6 in which a priori information about the directions of arrival (DOA) and/or the directionally selective channel impulse responses (h $^{(k) (kd)}$) and/or interference sources can be set by an operations and maintenance center (OMC).

8. Method according to one of the preceding claims in which to determine the direction of arrival (DOA)

- non-directionally selective channel impulse responses (g) are determined, and
- the direction of arrival (DOA) is determined for at least one partial wave from non-directionally selective channel impulse responses (g),

9. Method according to one of the preceding claims in which to determine the direction of arrival (DOA) of partial waves a high-resolution directional estimation process is used.

10. Method according to one of the preceding claims in which to detect the data (d) decision feedback methods are used.

11. Method according to one of the preceding claims in which to determine the direction of arrival (DOA) an average of the determined values is taken over a time interval.

12. Method according to Claim 11 in which the time interval is adjustable where changes to the directions of arrival (DOA) cause a change in the time interval.

13. Reception device to detect data (d) from subscriber signals transmitted via a radio interface, whereby a kth subscriber signal, k=1..K, is transmitted by Kd different part waves that each vary in their direction of arrival at the point of reception,

- with assigned Ka reception sensors (A),
- with at least one direction estimator (DOAE) to determine the direction of arrival (DOA) of at least one partial wave,
- with a directionally selective channel estimator (JDCE) to determine directionally selective (i.e. assigned to different directions of arrival) channel impulse responses (h $^{(k) (kd)}$),

- with a detection device (JDD) to detect the data (d) from the reception signals ($e^{(ks)}$) produced from the data-bearing sections of K subscriber signals using the direction of arrival (DOA) determined above and the directionally selective channel impulse responses ($h^{(k)\,(kd)}$)

**14.** Reception device according to Claim 13
with at least one channel estimator (JCE) to estimate non-directionally selective channel impulse responses (g).

**15.** Reception device according to Claim 13 or 14,
in which a CDMA method is used to separate subscribers and the detection device (JDD) to detect data using subscriber-specific code (c).

**16.** Reception device according to Claim 15
in which the detection device (JDD) considers influences of other subscriber signals during data detection.

**17.** Reception device according to one of the Claims 13 to 16, in which subscribers are separated using a TDMA and/or FDMA method.

**18.** Reception device according to one of the Claims 13 to 17
in which using the knowledge about the directions of arrival, the power, the spectrum or the covariance matrix of interference signals by the detection device (JDD) interference is suppressed.

**19.** Reception device according to one of the Claims 13 to 18,
in which after the estimation of the directions of arrival (DOA) of interference signals, an improved channel estimation and interference suppression is carried out as iteration by the detection device (JDD).

**20.** Reception device according to one of the Claims 13 to 19,
which forms part of a base station (BS) of a mobile communication system.


**Revendications**

**1.** Procédé pour la détection de données (d) à partir de signaux d'abonnés transmis par une interface radio, dans lequel

- un nombre Ka de capteurs de réception (A) est attribué à un dispositif de réception,
- un k-ième signal d'abonnés, k = 1 .. K, est transmis par Kd ondes partielles qui se différencient dans leur direction d'incidence (DOA) sur le lieu de réception,
- la direction d'incidence (DOA) est déterminée par au moins une onde partielle,
- des réponses d'impulsion de canal ($h^{(k)(kd)}$) sélectives en direction, c'est-à-dire pouvant être attribuées à différentes directions d'incidence (DOA), sont déterminées, et
- les données ($d^{(k)}$) sont détectées à partir des signaux de réception ($e^{\,(ka)}$) provenant de K signaux d'abonnés en utilisant les directions d'incidence (DOA) déterminées auparavant et les réponses d'impulsion de canal ($h^{(k)(kd)}$) sélectives en direction.

**2.** Procédé selon la revendication 1, dans lequel

- les K signaux d'abonnés se composent de parties supportant des données et de séquences d'entraînement (tseq1, tseq2, tseqK),
- les réponses d'impulsion de canal ($h^{\,(k)\,(kd)}$) sélectives en direction sont déterminées à partir des signaux de réception ($em^{(ka)}$) provenant des séquences d'entraînement (tseq1, tseq2, tseqK) des K signaux d'abonnés, et
- les données ($d^{(k)}$) sont détectées à partir des signaux de réception ($e^{(ka)}$) provenant des parties supportant des données.

**3.** Procédé selon la revendication 1 ou 2, dans lequel
la détermination des réponses d'impulsion de canal ($h^{(k)(kd)}$) sélectives en direction et la détection de données sont effectuées à partir de signaux d'abonnés d'un bloc radio.

**4.** Procédé selon la revendication 1 ou 2, dans lequel

la détermination des réponses d'impulsion de canal ($h^{(k)(kd)}$) sélectives en direction et la détection de données sont effectuées à partir de signaux d'abonnés de différents blocs radio.

5. Procédé selon la revendication 4, dans lequel
les directions d'incidence (DOA) et/ou les réponses d'impulsion de canal ($h^{(k)(kd)}$) sélectives en direction sont déterminées de nouveau avec une procédure d'asservissement selon une période qui est plus longue qu'une structure de cadre spécifique au bloc radio.

6. Procédé selon la revendication 4, dans lequel
des informations (info a priori) sur les directions d'incidence (DOA) et/ou sur les réponses d'impulsion de canal ($h^{(k)(kd)}$) sélectives en direction sont mémorisées de façon permanente dans le dispositif de réception.

7. Procédé selon la revendication 6, dans lequel
les informations (info a priori) sur les directions d'incidence (DOA), les réponses d'impulsion de canal ($h^{(k)(kd)}$) sélectives en direction et/ou sur des sources parasites peuvent être réglées par un centre opérationnel et de maintenance (OMC).

8. Procédé selon l'une quelconque des revendications précédentes, pour lequel, pour la détermination des directions d'incidence (DOA),

- des réponses d'impulsion de canal (g) non sélectives en direction sont déterminées, et
- la direction d'incidence (DOA) d'au moins une onde partielle est déterminée à partir des réponses d'impulsion du canal (g) non sélectives en direction.

9. Procédé selon l'une quelconque des revendications précédentes, dans
lequel des procédés d'estimation de direction à haute résolution sont utilisés pour la détermination des directions d'incidence (DOA) des ondes partielles.

10. Procédé selon l'une quelconque des revendications précédentes, dans
lequel des méthodes pour la réaction de décision sont appliquées pour la détection des données (d).

11. Procédé selon l'une quelconque des revendications précédentes, dans
lequel on effectue un calcul de moyenne des valeurs déterminées par rapport à un intervalle de temps pour la détermination des directions d'incidence (DOA).

12. Procédé selon la revendication 11, dans lequel
l'intervalle de temps peut être réglé, des variations des directions d'incidence (DOA) provoquant une variation de l'intervalle de temps.

13. Dispositif de réception pour la détection des données (d) à partir de
signaux d'abonnés transmis au moyen d'une interface radio, moyennant quoi un k-ième signal d'abonné, k = 1 .. K, est transmis par Kd ondes partielles qui se différencient dans leur direction d'incidence (DOA) sur le lieu de réception,

- avec Ka capteurs de réception (A) attribués,
- avec au moins un estimateur de direction (DOAE) pour la détermination de directions d'incidence (DOA) d'au moins une onde partielle,
- avec un estimateur de canal (JDCE) sélectif en direction pour la détermination de réponses d'impulsion de canal ($h^{(k)(kd)}$) sélectives en direction, c'est-à-dire pouvant être attribuées à différentes directions d'incidence (DOA),
- avec un dispositif de détection (JDD) pour la détection des données (d) de signaux de réception ($e^{(ka)}$) provenant de parties supportant des données des K signaux d'abonnés, en utilisant les directions d'incidence (DOA) déterminées auparavant et les réponses d'impulsion de canal ($h^{(k)(kd)}$) sélectives en direction.

14. Dispositif de réception selon la revendication 13,
avec au moins un estimateur de canal (JCE) pour l'estimation de réponses d'impulsion de canal (g) non sélectives en direction.

15. Dispositif de réception selon la revendication 13 ou 14,
dans lequel un procédé AMRC est utilisé pour une séparation d'abonnés et le dispositif de détection (JDD) effectue la détection de données à l'aide de codes (c) spécifiques à chaque abonné.

16. Dispositif de réception selon la revendication 15,
dans lequel le dispositif de détection (JDD) tient compte des influences des autres signaux d'abonnés pour la détection des données.

17. Dispositif de réception selon l'une quelconque des revendications 13 à 16,
dans lequel une séparation d'abonnés est utilisée selon une procédure AMRT et/ou une procédure AMRF.

18. Dispositif de réception selon l'une quelconque des revendications 13 à 17, dans lequel le dispositif de détection (JDD) effectue une suppression des interférences en utilisant la connaissance sur les directions d'incidence, les puissances, le spectre ou une matrice de corrélation de signaux parasites.

19. Dispositif de réception selon l'une quelconque des revendications 13 à 18, dans lequel le dispositif de détection (JDD) effectue une estimation de canal améliorée et une suppression des interférences d'après l'estimation des directions d'incidence (DOA) de signaux parasites dans le sens d'une itération.

20. Dispositif de réception selon l'une quelconque des revendications 13 à 19, qui est conçu comme une partie d'une station de base (BS) d'un système de communication mobile.

# Fig.1

## Fig.2

f (FDMA)

| Tln109 | Tln110 | Tln111 | ... | Tln120 |

...

| Tln13 | Tln14 | Tln15 | ... | Tln24 |
| Tln1 | Tln2 | Tln3 | ... | Tln12 |

t (TDMA)

| d | tseq1 | d | gp |

| d | tseq2 | d | gp |

| d | tseqK | d | gp |

c (CDMA)   c   c

Fig.3

EP 0 866 568 B1

## Fig.4

em

JDCE

BF #1,1

w1
(x)

w2
(x)

w3
(x)     S

w4
(x)

DMF

...

BF #K,Kd

w5
(x)

w6
(x)

w7
(x)     S

w8
(x)

DMF

IC
(SI & CI)

$h^{(1)(1)}$

$h^{(1)(Kd)}$

$h^{(K)(1)}$

$h^{(K)(Kd)}$

DOA    Störerrichtung, -leistung, -spektrum

# Fig.5